# EUROPÄISCHE PATENTSCHRIFT

(11) **EP 0 799 559 B1**
(45) Veröffentlichungstag und Bekanntmachung des Hinweises auf die Patenterteilung: **15.07.1998**
(21) Anmeldenummer: 95938385.2
(22) Anmeldetag: 02.11.1995
(51) Int. Cl.: H05K 7/00

(54) **SCHALTSCHRANK MIT EINEM RAHMENGESTELL**
SWITCHGEAR CABINET WITH FRAME
ARMOIRE DE DISTRIBUTION COMPORTANT UNE BAIE

(30) Priorität: 23.12.1994 DE 4446223
(43) Veröffentlichungstag der Anmeldung: 08.10.1997
(73) Patentinhaber: Rittal-Werk Rudolf Loh GmbH & Co. KG, 35745 Herborn (DE)
(72) Erfinder: BENNER, Rolf, D-35745 Herborn-Amdorf (DE)
(74) Vertreter: Fleck, Hermann-Josef, Dr.-Ing.
(86) Internationale Anmeldenummer: EP9504286
(87) Internationale Veröffentlichungsnummer: WO9620582

(56) Entgegenhaltungen:
- EP-A- 0 145 916
- WO-A-93/07072
- WO-A-93/18246
- FR-A- 2 365 764

## Beschreibung

Die Erfindung betrifft einen Schaltschrank mit einem aus Rahmenschenkeln und Eckverbindern zusammengesetzten Rahmengestell, dessen offene Bodenseite mittels eines oder mehrerer Bodenblechen verschließbar sind.

Bei einem derartigen Schaltschrank ist die Anbringung der Bodenbleche stets so vorzunehmen, daß sie beim aufgestellten Schaltschrank von dessen Innenraum aus angebracht und wieder abgenommen werden können. Dabei spielt der Aufwand für die Befestigung eine wesentliche Rolle. Bei den bekannten Schaltschränken ist der Aufwand meist beachtlich.

Es ist Aufgabe der Erfindung, einen Schaltschrank der eingangs erwähnten Art zu schaffen, bei dem die Anbringung und die Abnahme von Bodenblechen mit wenig Aufwand und auf einfache Weise vom Innenraum des Schaltschrankes aus möglich ist.

Diese Aufgabe wird nach der Erfindung dadurch gelöst, daß die als untere Tiefenstreben dienenden Rahmenschenkel von unten her mittels im wesentlichen U-förmigen und mit Seitenschenkeln versehenen Abdeckelementen abgedeckt sind, wobei die Abdeckelemente mit den Tiefenstreben und/oder den Eckverbindern verbunden sind, daß die Tiefenstreben im Bereich ihrer Außenkanten abgeschrägt sind und eine Aufnahme für die äußeren Seitenschenkel der Abdeckelemente bilden, daß die inneren Seitenschenkel der Abdeckelemente in Richtung zur zugekehrten Tiefenstrebe hin abgekantete Auflageflansche für die Bodenbleche aufweisen und daß mittels U-förmiger Klammerelemente mit Klemmschrauben die Bodenbleche mit den Auflageflanschen der inneren Seitenschenkel der Abdeckelemente verbindbar sind.

Die U-förmigen Abdeckelemente sind mit den unteren Tiefenstreben des Rahmengestelles verbunden, wobei die äußeren Seitenschenkel in Aufnahmen der Tiefenstreben eingeführt sind und mit den Seitenwänden die äußere Kontur des Schaltschrankes vervollständigen. Die inneren Seitenschenkel mit den Auflageflanschen begrenzen mit den vorderen und hinteren, unteren Rahmenschenkel des Rahmengestelles die Öffnung im Bodenbereich des Schaltschrankes, die leicht mit einem oder mehreren, aneinandergereihten Bodenblechen verschlossen werden kann. Dazu werden die Bodenbleche mit ihren Randbereichen mit den Auflageflanschen verbunden. Dies kann auf einfache Weise mit Klammerelementen, die mit Klemmschrauben versehen sind, erfolgen. Die Klammerelemente umschließen dabei die einander abgekehrten Seiten von Bodenblech und Auflageflansch.

Die Breite der Bodenbleche ist auf den Außenabstand der entgegengesetzt gerichteten Auflageflansche der beiden, die unteren Tiefenstreben abdeckenden Abdeckelemente abgestimmt.

Die Verbindung der Abdeckelemente an dem Rahmengestell kann nach einer Ausgestaltung so ausgeführt sein, daß die Abdeckelemente im Bereich der den Eckverbindern zugekehrten Ecken abgeschrägt und die äußeren Seitenschenkel entsprechend verkürzt sind, und daß die Abdeckelemente mit zurückgesetzten Anlageflächen der Eckverbinder bündig mit den Seitenwänden und den Außenflächen der Eckverbinder verbunden sind.

Ist vorgesehen, daß die Bodenbleche an vertikalen Profilseiten der vorderen und hinteren Rahmenschenkel des Rahmengestelles anliegen, dann wird die gesamte Öffnung verschlossen.

Ein dichter Verschluß der Öffnung wird dadurch erreicht, daß zwischen die Bodenbleche und den Auflageflanschen der inneren Seitenschenkel der Abdeckelemente Dichtungselemente angeordnet sind und daß die den Profilseiten der vorderen und hinteren Rahmenschenkel des Rahmengestelles zugekehrten Kanten der Bodenbleche mit Dichtungselementen versehen sind.

Sind mehrere Bodenbleche verwendet, dann ist zusätzlich vorgesehen, daß die Trennfugen zwischen benachbarten Bodenblechen mittels Dichtungselementen abgedichtet sind.

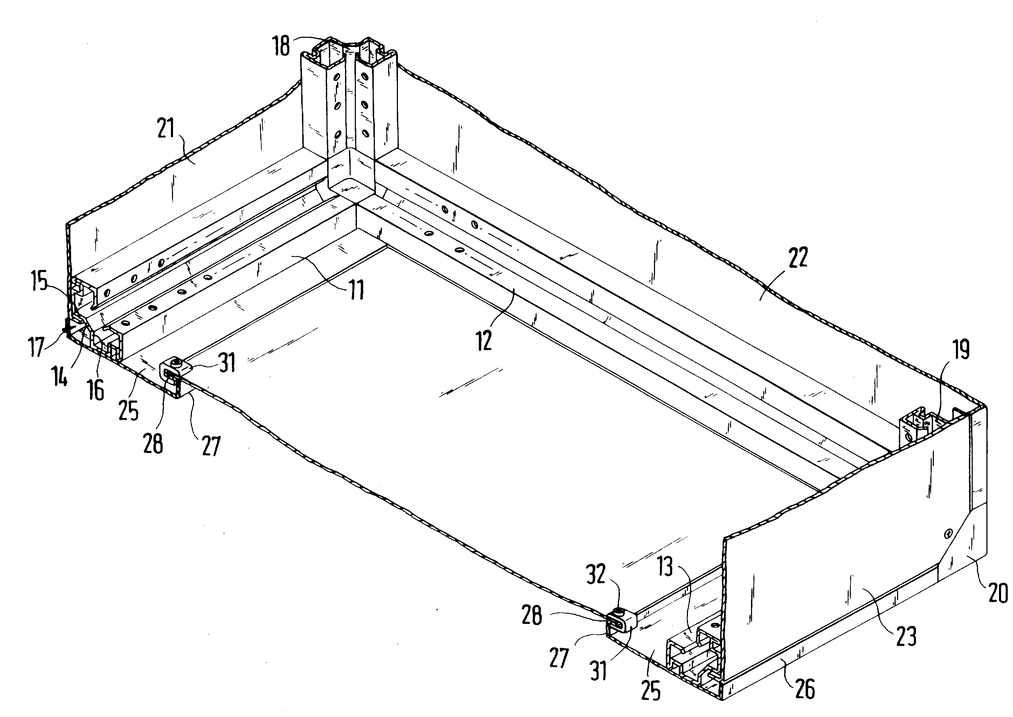

Die Erfindung wird anhand eines in der Zeichnung dargestellten Ausführungsbeispiels näher erläutert. Dabei ist nur der hintere, untere Bereich des Schaltschrankes mit den Einzelheiten gezeigt, die für die Befestigung von Bodenblechen erforderlich sind. Von dem Rahmengestell des Schaltschrankes sind die als Tiefenstreben 11 und 13 verwendeten Rahmenschenkel, der hintere, untere Rahmenschenkel 12 und die hinteren vertikalen Rahmenschenkel 18 und 19 zum Teil dargestellt. Die Tiefenstrebe 13 ist über einen Eckverbinder 20 mit den Rahmenschenkeln 12 und 19 und die Tiefenstrebe 13 über einen Eckverbinder 20 mit den Rahmenschenkeln 12 und 18 verbunden.

Alle Rahmenschenkel 12, 18 und 19 und auch die Tiefenstreben 11 und 13 haben keine Außenkante, sie sind in diesem Bereich abgeschräft und bilden mit den Profilseiten 14, 15 und 16 eine außenliegende Aufnahme 17, in die die abgekanteten Ränder der Seitenwände 21 und 23 sowie der Rückwand 22 so eingeführt sind, daß die quaderförmige Außenkontur des Schaltschrankes vervollständigt ist. Auch die Türe des Schaltschrankes ist auf dieselbe Weise in den Schaltschrank integriert, wenn sie ihre Schließstellung einnimmt.

Im Bodenbereich werden die Tiefenstreben 11 und 13 mittels im wesentlichen U-förmigen Abdeckelementen 25 von unten her abgedeckt. Die Abdeckelemente 25 sind im Bereich ihrer äußeren Ecken abgeschrägt, wobei die äußeren Seitenschenkel 26 entsprechend verkürzt sind. Wie die Seitenwand 23 liegt das Abdeckelement 25 an einer um die Wandstärke desselben zurückgesetzten Anlagefläche des Eckverbinders 20 an und wird mit diesem verschraubt. In dieser Stellung schließt die Außenseite des äußeren Seitenschenkels 26 des Abdeckelementes 25 bündig mit der Außenseite der Seitenwand 23 und der Außenfläche des Eckverbinders 20 ab.

In gleicher Weise ist die Tiefenstrebe 11 mit einem Abdeckelement 25 abgedeckt.

Die einander zugekehrten inneren Seitenschenkel 27 der beiden, mit den den Tiefenstreben 11 und 13 zugeordneten Eckverbindern verbundenen Abdeckelemente 25 sind am Ende zu ihren zugeordneten Tiefenstreben 11 bzw. 13 hin als Auflageflansche 28 abgekantet. Die Bodenbleche 30 sind in ihrer Breite auf den Außenabstand der entgegengesetzt gerichteten Auflageflansche 28 abgestimmt, so daß sie mittels Klammerelementen 31 mit den Auflageflanschen 28 verbunden werden können. Die Klammerelemente 31 umgreifen die freiliegende Außenseite des Bodenbleches 30 und die Unterseite der Auflageflansche 28. Mit einer im Klammerelement 31 verstellbaren Klemmschraube 32 werden Bodenbleche 30 und Auflageflansche 28 gegeneinander gepreßt. Dabei kann zwischen Bodenblech 30 und Auflageflansch 28 ein Dichtungselement angeordnet werden, das auch eine HF-Abdichtung bewirken kann.

Das Bodenblech 30 liegt an einer vertikalen Profilseite des hinteren, unteren Rahmenschenkels 12 an. Auch diese Trennfuge kann mittels eines Dichtungselementes abgedichtet werden, wobei z.B. ein U-förmiges Dichtungselement auf die Kante des Bodenbleches 30 aufgebracht wird. In ähnlicher Weise kann auch eine Trennfuge zwischen zwei aneinandergereihten Bodenblechen 30 abgedichtet werden. Dasselbe gilt für die Abdichtung zum vorderen, unteren (nicht dargestellten) Rahmenschenkel hin.

## Patentansprüche

1. Schaltschrank mit einem aus Rahmenschenkeln und Eckverbindern zusammengesetzten Rahmengestell, dessen offene Bodenseite mittels eines oder mehrerer Bodenblechen verschließbar sind,
dadurch gekennzeichnet,
daß die als untere Tiefenstreben (11,13) dienenden Rahmenschenkel von unten her mittels im wesentlichen U-förmigen und mit Seitenschenkeln (26,27) versehenen Abdeckelementen (25) abgedeckt sind, wobei die Abdeckelemente (25) mit den Tiefenstreben (11,13) und/oder den Eckverbindern (20) verbunden sind,
daß die Tiefenstreben (11,13) im Bereich ihrer Außenkanten abgeschrägt sind und eine Aufnahme (17) für die äußeren Seitenschenkel (26) der Abdeckelemente (25) bilden,
daß die inneren Seitenschenkel (27) der Abdeckelemente (25) in Richtung zur zugekehrten Tiefenstrebe (11,13) hin abgekantete Auflageflansche (28) für die Bodenbleche (30) aufweisen und
daß mittels U-förmiger Klammerelemente (31) mit Klemmschrauben (32) die Bodenbleche (30) mit den Auflageflanschen (28) der inneren Seitenschenkel (27) der Abdeckelemente (25) verbindbar sind.

2. Schaltschrank nach Anspruch 1,
dadurch gekennzeichnet,
daß die Breite der Bodenbleche (30) auf den Außenabstand der entgegengesetzt gerichteten Auflageflansche (28) der beiden, die unteren Tiefenstreben (11,13) abdeckenden Abdeckelemente (25) abgestimmt ist.

3. Schaltschrank nach Anspruch 1 oder 2,
dadurch gekennzeichnet,
daß die Abdeckelemente (25) im Bereich der den Eckverbindern (20) zugekehrten Ecken abgeschrägt und die äußeren Seitenschenkel (26) entsprechend verkürzt sind, und
daß die Abdeckelemente (25) mit zurückgesetzten Anlageflächen der Eckverbinder (20) bündig mit den Seitenwänden (21,23) und den Außenflächen der Eckverbinder (20) verbunden sind.

4. Schaltschrank nach einem der Ansprüche 1 bis 3,
dadurch gekennzeichnet,
daß die Bodenbleche (30) an vertikalen Profilseiten der vorderen und hinteren Rahmenschenkel (12) des Rahmengestelles anliegen.

5. Schaltschrank nach einem der Ansprüche 1 bis 4,
dadurch gekennzeichnet,
daß zwischen die Bodenbleche (30) und den Auflageflanschen (28) der inneren Seitenschenkel (27) der Abdeckelemente (25) Dichtungselemente angeordnet sind.

6. Schaltschrank nach Anpruch 4,
dadurch gekennzeichnet,
daß die den Profilseiten der vorderen und hinteren Rahmenschenkel (12) des Rahmengestelles zugekehrten Kanten der Bodenbleche (30) mit Dichtungselementen versehen sind.

7. Schaltschrank nach einem der Ansprüche 1 bis 6,
dadurch gekennzeichnet,
daß die Trennfugen zwischen benachbarten Bodenblechen (30) mittels Dichtungselementen abgedichtet sind.

## Claims

1. Switchgear cabinet, including a framework, which comprises frame members and corner joints, the open bottom side of said framework being closable by means of one or more bottom plates, characterised in that the frame members, serving as lower depth bars (11,13), are covered from below by means of substantially U-shaped cover members (25), which are provided with lateral arms (26,27), the cover members (25) being connected to the depth bars (11,13) and/or the corner joints (20), in that the depth bars (11,13) are chamfered in the region of their outer edges and form a receiving means (17) for the outer lateral arms (26) of the cover members (25), in that the inner lateral arms (27) of the cover members (25) have supporting flanges (28) for the bottom plates (30), said flanges being angled towards the nearest depth bar (11,13), and in that the bottom plates (30) are connectable to the supporting flanges (28) of the inner lateral arms (27) of the cover members (25) by means of U-shaped clamping members (31) together with clamping screws (32).

2. Switchgear cabinet according to claim 1, characterised in that the width of the bottom plates (30) is adapted to the external spacing between the oppositely orientated supporting flanges (28) of the two cover members (25), which cover the lower depth bars (11,13).

3. Switchgear cabinet according to claim 1 or 2, characterised in that the cover members (25) are chamfered in the region of the corners facing the corner joints (20), and the outer lateral arms (26) are correspondingly shortened, and in that the cover members (25) are connected to offset abutment faces of the corner joints (20) flush with the lateral walls (21,23) and the external faces of the corner joints (20).

4. Switchgear cabinet according to one of claims 1 to 3, characterised in that the bottom plates (30) abut against vertical profile sides of the front and rear frame members (12) of the framework.

5. Switchgear cabinet according to one of claims 1 to 4, characterised in that sealing members are disposed between the bottom plates (30) and the supporting flanges (28) of the inner lateral arms (27) of the cover members (25).

6. Switchgear cabinet according to claim 4, characterised in that the edges of the bottom plates (30), which face the profile sides of the front and rear frame members (12) of the framework, are provided with sealing members.

7. Switchgear cabinet according to one of claims 1 to 6, characterised in that the butt joints between adjacent bottom plates (30) are sealed by means of sealing members.

## Revendications

1. Armoire de distribution avec une structure de cadre constituée de branches de cadre et de cornières de jonction, dont le fond ouvert peut être fermée au moyen d'une ou de plusieurs tôles de fond,
caractérisée
en ce que les branches servant d'entretoises de profondeur inférieures (11, 13) sont recouvertes par le dessous au moyen d'éléments de recouvrement (25) en substance en forme de U et dotés d'ailes latérales (26, 27), les éléments de recouvrement (25) étant reliés aux entretoises de profondeur (11, 13) et/ou aux cornières de jonction (20),
en ce que les entretoises de profondeur (11, 13 sont biseautées dans la région de leurs arêtes extérieures et constituent un logement de réception (17) pour les ailes latérales extérieures (26) des éléments de recouvrement (25),
en ce que les ailes latérales intérieures (27) des éléments de recouvrement (25) présentent,en direction de l'entretoise de profondeur (11, 13) qui leur fait face, des brides d'application biseautées pour les tôles de fond (30), et
en ce que les tôles de fond (30) peuvent, au moyen d'éléments d'agrafage, forme de U (31) avec des vis de serrage (32), être reliées aux brides d'application (28) des ailes latérales intérieures (27) des éléments de recouvrement (25).

2. Armoire de distribution suivant la revendication 1,
caractérisée
en ce que la largeur des tôles de fond (30) est harmonisée avec la distance extérieure des brides 'application (28) de faisant face des deux éléments de recouvrement (25) qui recouvrent les entretoises de profondeur inférieures (11, 13).

3. Armoire de distribution suivant la revendication 1 ou 2,
caractérisée
en ce que dans la région des angles faisant face aux cornières de jonction (20), les éléments de recouvrement (25) sont biseautés et en ce que les ailes latérales extérieures (26) sont raccourcies en correspondance, et
en ce que les éléments de recouvrement (25) sont par des surfaces d'application décalées vers l'arrière des cornières d'angle (20) reliés à fleur avec les parois latérales (21, 23) et les faces extérieures des cornières d'angle (20).

4. Armoire de distribution suivant l'une quelconque des revendications de 1 à 3,
caractérisée
en ce que les tôles de fond (30) s'appliquent sur des côtés de profilé verticaux des branches de cadre (12) avant et arrière de la structure de cadre.

5. Armoire de distribution suivant l'une quelconque des revendications de 1 à 4,
caractérisée
en ce que des éléments d'étanchéité sont disposés entre les tôles de fond 30) et les brides d'application (28) des ailes latérales intérieures (27) des éléments de recouvrement.

6. Armoire de distribution suivant la revendication 4,
caractérisée
en ce que les arêtes des tôles de fond (30) qui font face aux côtés de profilé des branches de cadre (12)de la structure de cadre sont dotées d'éléments de joint.

7. Armoire de distribution suivant l'une quelconque des revendications de 1 à 6,
caractérisée
en ce que les fentes de séparation entre deux tôles de fond (30) voisines sont rendues hermétiques au moyen d'éléments d'étanchéité.
